# EUROPÄISCHE PATENTANMELDUNG

(11) **EP 3 336 119 A1**
(43) Veröffentlichungstag der Anmeldung: **20.06.2018**
(21) Anmeldenummer: 16204073.7
(22) Anmeldetag: 14.12.2016
(51) Int. Cl.: C08G 59/18

(54) **HÄRTER FÜR KALTHÄRTENDE EPOXIDHARZ-KLEBSTOFFE MIT SCHNELLEM FESTIGKEITSAUFBAU**

(71) Anmelder: Sika Technology AG, 6340 Baar (CH)
(72) Erfinder: Gerber, Ulrich, 8142 Uitikon-Waldegg (CH)
(74) Vertreter: Sika Patent Attorneys

(57) **Zusammenfassung**

Die vorliegende Erfindung betrifft ein Addukt **AD** erhalten aus der Umsetzung von mindestens einem Novolak-Glycidylether enthaltend im Mittel 2.5 bis 4 Epoxidgruppen pro Molekül mit einer Aminmischung enthaltend Bis(6-amino-hexyl)amin und mindestens ein von Bis(6-aminohexyl)amin verschiedenes Amin **A1,** welches mindestens eine primäre Aminogruppe aufweist. Bevorzugt stellt die Aminmischung eine technische Qualität von Bis(6-aminohexyl)amin dar, welche 25 bis 82 Gewichts-% Bis(6-aminohexyl)amin enthält.

Das Addukt **AD** ist einfach und ohne die Verwendung von Lösemitteln herstellbar und ermöglicht geruchsarme, wenig toxische und niedrigkviskose Härter, welche auch in der Kälte verarbeitet und aufbewahrt werden können. Damit ausgehärtete Epoxidharz-Zusammensetzungen bauen bei Umgebungstemperaturen im Freien sehr schnell hohe Haftkräfte und hohe Festigkeiten auf, auch auf schwierig zu verklebenden Untergründen.

## Beschreibung

### Technisches Gebiet

Die Erfindung betrifft das Gebiet der Amin-Epoxidharz-Addukte, der Härter für Epoxidharze und der Epoxidharz-Klebstoffe.

### Stand der Technik

Bei Raumtemperatur härtbare Epoxidharz-Klebstoffe werden für viele Anwendungen eingesetzt. Sie verfügen typischerweise über eine gute Beständigkeit, eine hohe Festigkeit und eine starke Haftung zu unterschiedlichen Substraten. Für Anwendungen in der Bauindustrie müssen sie unter Baustellenbedingungen einsetzbar sein; dafür sind insbesondere eine einfache Verarbeitbarkeit sowie eine zuverlässige und schnelle Aushärtung bei Umgebungstemperaturen im Freien, insbesondere auch in der Kälte und bei hoher Feuchtigkeit oder Nässe, wichtig.

Aus dem Stand der Technik sind Epoxidharz-Klebstoffe bekannt, bei welchen als Bestandteil des Härters sogenannte Mannich-Basen verwendet werden. Diese sind aber aufwändig in der Herstellung und weisen typischerweise einen hohen Gehalt an freien Phenolen wie Phenol, Nonylphenol oder p-tert.Butylphenol auf, was aus Toxizitätsgründen heutzutage unerwünscht ist.

Typische raumtemperaturhärtende Epoxidharz-Klebstoffe, welche keine freien Phenole enthalten, härten im Freien, insbesondere unterhalb von 10 °C und erhöhter Feuchtigkeit, langsam aus, bauen nur langsam Festigkeit auf und bleiben lange klebrig. Die Endfestigkeit bleibt dabei oft niedriger als bei Raumtemperatur, und auf einigen Substraten, insbesondere Beton oder Stahl, wird nur eine ungenügende Haftung erzielt.

Die in solchen Klebstoffen eingesetzten Härter enthalten einen grossen Anteil an niedermolekularen Aminen, welche partiell mit Flüssigharzen adduktiert sein können, und gegebenenfalls zusätzlich tertiäre Amine oder Mannich-Basen als Beschleuniger. Diese Härter sind einfach und kostengünstig herzustellen, haben aber einige Nachteile. Durch den hohen Gehalt an niedermolekularen Aminen sind sie geruchsintensiv und erfordern bei der Verarbeitung erhöhte Arbeitsschutz-Massnahmen. Zudem sind sie anfällig für Blushing, das heisst Salzbildung mit Kohlendioxid aus der Luft, vor allem bei Kälte und Feuchtigkeit. Es besteht somit ein Bedarf nach neuen Härtern für Epoxidharze, welche kostengünstig herstellbar und geruchsarm sind und Klebstoffe ermöglichen, die auch bei der Anwendung im Freien einfach verarbeitet werden können und dabei schnell und zuverlässig unter Ausbildung hoher Festigkeit und starker Haftkräfte aushärten.

US 4,525,542 beschreibt die Umsetzung von Novolak-Glycidylethern mit Polyaminen zu Addukten, die als Zwischenprodukte in situ mit Monoepoxiden weiter adduktiert und dann als Härter für Epoxidharz-Zusammensetzungen mit guter Tieftemperaturhärtung verwendet werden.

US 4,348,505 beschreibt flüssige Addukte von Polyepoxiden mit einer Funktionalität grösser als 2, insbesondere Novolak-Glyciylethern, für stark lösemittelhaltige Schutzbeschichtungen, welche bei Raumtemperatur oder in der Hitze ausgehärtet werden und über eine hohe Chemikalienbeständigkeit verfügen. Novolak-Addukte werden im Stand der Technik typischerweise unter Verwendung von Lösemitteln hergestellt, wodurch die Viskosität der Reaktionsmischung erniedrigt und ein Ausfallen des Novolak-Harzes verhindert wird. Die so erhaltenen Addukte sind aber entweder lösemittelhaltig und dadurch geruchsintensiv und führen zu Emissionen und Schwund während und nach dem Aushärten, oder sie sind wegen der aufwändigen Entfernung des Lösemittels teuer in der Herstellung und können beim Lagern fest werden, insbesondere in der Kälte.

### Darstellung der Erfindung

Aufgabe der Erfindung ist es daher, einen Härter für Epoxidharze zur Verfügung zu stellen, der kostengünstig herstellbar, geruchsarm und emissionsarm ist und Epoxidharz-Klebstoffe ermöglicht, die bei Umgebungsbedingungen, insbesondere auch bei Temperaturen im Bereich von 0 bis 10 °C und hoher Feuchtigkeit, einfach verarbeitbar sind, schnell aushärten und dabei eine hohe Festigkeit und eine starke Haftung zu verschiedenen Substraten, insbesondere Beton, Stahl und Kohlefaser-Verbundwerkstoffen, ausbilden.

Überraschenderweise wird diese Aufgabe mit einem Addukt wie in Anspruch 1 beschrieben gelöst. Das Addukt ist bei Raumtemperatur fliessfähig und weist primäre Aminogruppen auf. Es wird erhalten durch Umsetzung von mindestens einem Novolak-Glycidylether mit einer mittleren Funktionalität im Bereich von 2.5 bis 4 mit einer Aminmischung enthaltend Bis(6-aminohexyl)amin und mindestens ein Amin **A1.** Das Addukt lässt sich überraschend einfach und kostengünstig ohne Lösemittel oder Verdünner herstellen. Es ermöglicht geruchsarme und niedrigkviskose Härter, welche trotz des hohen Schmelzpunkts von Bis(6-aminohexyl)amin und der hohen Funktionalität des Novolak-Glycidylethers über eine tiefe Erstarrungstemperatur verfügen und somit auch in der Kälte verarbeitet und aufbewahrt werden können. Diese Härter ermöglichen Epoxidharz-Klebstoffe, welche bei Umgebungstemperaturen überraschend schnell eine hohe Festigkeit aufbauen, auch in der Kälte, und gleichzeitig hohe Haftkräfte entwickeln, auch bei Feuchtigkeit und auf schwierig zu verklebenden Substraten. Diese beiden Eigenschaften sind im allgemeinen gegenläufig, das heisst schnell Festigkeit aufbauende Systeme neigen typischerweise zu geringer Haftkraft und umgekehrt.

Im Vergleich mit einem Addukt abgeleitet von reinem Bis(6-aminohexyl)amin, also ohne Amin **A1,** ermöglicht das im Anspruch 1 beschriebene Addukt überraschenderweise Epoxidharz-Klebstoffe mit einer schnelleren Festigkeitsentwicklung bei Raumtemperatur und in der Kälte, einer höheren Endfestigkeit und teilweise auch höheren Haftkräften.

Im Vergleich mit einem Addukt abgeleitet von Triethylentetramin anstelle von Bis(6-aminohexyl)amin ermöglicht das im Anspruch 1 beschriebene Addukt überraschenderweise Epoxidharz-Klebstoffe mit einer schnelleren Festigkeitsentwicklung bei Raumtemperatur und in der Kälte, einer deutlich höheren Endfestigkeit, höheren Haftkräften und deutlich weniger Aushärtungsstörungen bei der Aushärtung bei 5°C und ca. 70 % relativer Luftfeuchtigkeit.

Im Vergleich mit einem Addukt abgeleitet von einem Bisphenol-A-Diglycidylether anstelle des Novolak-Glycidylethers ermöglicht das im Anspruch 1 beschriebene Addukt überraschenderweise Epoxidharz-Klebstoffe mit einer deutlich schnelleren Festigkeitsentwicklung in der Kälte und einer deutlich höheren Endfestigkeit, wobei diese Vorteile durch die Verwendung von etwas Novolak-Glycidylether in der Harz-Komponente des Klebstoffs nur zu einem kleinen Teil erreicht werden.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Addukt **AD** erhalten aus der Umsetzung von
- mindestens einem Novolak-Glycidylether enthaltend im Mittel 2.5 bis 4 Epoxidgruppen pro Molekül mit
- einer Aminmischung enthaltend Bis(6-aminohexyl)amin und mindestens ein von Bis(6-aminohexyl)amin verschiedenes Amin **A1,** welches mindestens eine primäre Aminogruppe aufweist.

Mit "Poly" beginnende Substanznamen wie Polyamin, Polyol oder Polyepoxid bezeichnen Substanzen, die formal zwei oder mehr der in ihrem Namen vorkommenden funktionellen Gruppen pro Molekül enthalten.

Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.

Als "Aminwasserstoff" werden die Wasserstoffatome von primären und sekundären Aminogruppen bezeichnet.

Als "Aminwasserstoff-Equivalentgewicht" wird die Masse eines Amins oder einer Amin-haltigen Zusammensetzung, die ein Molequivalent Aminwasserstoff enthält, bezeichnet.

Als "Verdünner" wird eine in einem Epoxidharz lösliche und dessen Viskosität senkende Substanz bezeichnet, welche bei der Aushärtung des Epoxidharzes nicht kovalent in die Harzmatrix eingebaut wird.

Als "Viskosität" wird die dynamische Viskosität oder Scherviskosität bezeichnet, welche durch das Verhältnis zwischen der Schubspannung und der Scherrate (Geschwindigkeitsgefälle) definiert ist und wie in den Ausführungsbeispielen beschrieben bestimmt wird.

Als "Molekulargewicht" wird die molare Masse (in Gramm pro Mol) eines Moleküls bezeichnet. Als "mittleres Molekulargewicht" wird das Zahlenmittel Mₙ einer polydispersen Mischung von oligomeren oder polymeren Molekülen bezeichnet, welches üblicherweise mittels Gelpermeationschromatographie (GPC) gegen Polystyrol als Standard bestimmt wird.

Als "Raumtemperatur" wird eine Temperatur von 23 °C bezeichnet.

Ein geeigneter Novolak-Glycidylether ist abgeleitet von Novolaken, welche Kondensationsprodukte von Phenol oder Kresolen mit Formaldehyd bzw. Paraformaldehyd oder Acetaldehyd oder Crotonaldehyd oder Isobutyraldehyd oder 2-Ethylhexanal oder Benzaldehyd oder Furfural sind. Ein solcher Novolak-Glycidylether ist typischerweise bei Raumtemperatur flüssig, oder sehr hochviskos bis hin zu kaum fliessfähig, oder fest.

Bevorzugt ist der Novolak-Glycidylether ein Phenol-Novolak-Glycidylether. Diese sind abgeleitet von Phenol-Formaldehyd-Novolaken, welche auch als Epoxy-Phenol-Novolak-Harze bezeichnet werden.

Phenol-Novolak-Glycidylether sind kommerziell erhältlich, beispielsweise von Olin, Huntsman, Momentive oder Emerald Performance Materials. Bevorzugte Typen sind D.E.N.^{®} 431, D.E.N.^{®} 438 oder D.E.N.^{®} 439 (von Olin), Araldite^{®} EPN 1179, Araldite^{®} EPN 1180, Araldite^{®} EPN 1182 oder Araldite^{®} EPN 1182 (von Huntsman), Epon^{®} 154, Epon^{®} 160 oder Epon^{®} 161 (von Momentive) oder Epalloy^{®} 8250, Epalloy^{®} 8330 oder Epalloy^{®} 8350 (von Emerald Performance Materials).

Bevorzugt enthält der Novolak-Glycidylether im Mittel 2.5 bis 3.9 Epoxidgruppen pro Molekül. Erweist also bevorzugt eine mittlere Funktionalität im Bereich von 2.5 bis 3.9 auf.

Für die Umsetzung zum Addukt **AD** wird eine Aminmischung enthaltend Bis(6-aminohexyl)amin und mindestens ein von Bis(6-aminohexyl)amin verschiedenes Amin **A1,** welches mindestens eine primäre Aminogruppe aufweist, eingesetzt.

In der Aminmischung beträgt der Gehalt an Bis(6-aminohexyl)amin bevorzugt mindestens 25 Gewichts-%, insbesondere mindestens 50 Gewichts-%. In der Aminmischung beträgt der Gehalt an Aminen **A1** bevorzugt mindestens 15 Gewichts-%, insbesondere mindestens 20 Gewichts-%.

Besonders bevorzugt enthält die Aminmischung 25 bis 82 Gewichts-%, insbesondere 50 bis 78 Gewichts-%, Bis(6-aminohexyl)amin und 15 bis 75 Gewichts-%, insbesondere 20 bis 50 Gewichts-%, Amine **A1.**

Bevorzugt stellt die Aminmischung eine technische Qualität von Bis(6-amino-hexyl)amin dar. Geeignete technische Qualitäten von Bis(6-aminohexyl)amin fallen als Nebenprodukte aus der Herstellung von 1,6-Hexamethylendiamin an und sind kommerziell erhältlich, beispielsweise von Invista oder von Solvay. Sie enthalten neben Bis(6-aminohexyl)amin typischerweise 1,6-Hexamethylendiamin, höhere Oligomere von 1,6-Hexamethylendiamin, 6-Aminocapronitril, 6-Aminocaproamid, Caprolactam und/oder Wasser.

Das Amin **A1** ist somit bevorzugt ausgewählt aus der Gruppe bestehend aus 1,6-Hexamethylendiamin, höheren Oligomeren von 1,6-Hexamethylendiamin, 6-Aminocapronitril und 6-Aminocaproamid.

Als "höhere Oligomere von 1,6-Hexamethylendiamin" werden dabei Oligomere mit drei oder mehr 1,6-Hexamethylendiamin-Einheiten bezeichnet.

Ganz besonders bevorzugt stellt die Aminmischung eine technische Qualität von Bis(6-aminohexyl)amin dar, welche 25 bis 82 Gewichts-%, insbesondere 50 bis 78 Gewichts-%, Bis(6-aminohexyl)amin enthält, insbesondere kommerziell erhältliches Dytek^{®} BHMT Amine (50-78%) von Invista oder Rhodiamine^{®} BHT von Solvay.

Die Verwendung einer technischen Qualität von Bis(6-aminohexyl)amin als Aminmischung führt zu einem besonders kostengünstigen Addukt **AD,** welches eine besonders geringe Neigung zum Festwerden ("Erstarren") aufweist, was Härter mit einer guten Lagerstabilität bei tiefen Temperaturen ermöglicht. Ein solches Addukt **AD** führt zudem überraschenderweise zu Epoxidharz-Zusammensetzungen mit besonders hohen Festigkeiten und Haftkräften.

Das Addukt **AD** wird insbesondere erhalten aus der Umsetzung des Novolak-Glycidylethers mit einem stöchiometrischen Überschuss an Aminen. Insbesondere liegen die primären Aminogruppen der Aminmischung gegenüber den Epoxidgruppen des Novolak-Glyciylethers bei der Umsetzung zum Addukt im stöchiometrischen Überschuss vor.

Bei der Umsetzung zum Addukt beträgt das Verhältnis zwischen der Anzahl vorhandener primärer Aminogruppen und der Anzahl vorhandener Epoxidgruppen bevorzugt mindestens 3, insbesondere mindestens 4.

Bevorzugt liegt das Verhältnis zwischen der Anzahl vorhandener primärer Aminogruppen und der Anzahl vorhandener Epoxidgruppen bei der Umsetzung zum Addukt im Bereich von 3 bis 12, besonders bevorzugt 4 bis 8, insbesondere 4 bis 6. Auf diese Weise wird ein bei Raumtemperatur fliessfähiges Addukt mit gut handhabbarer Viskosität erhalten, welches primäre und sekundäre Aminogruppen und einen hohen Gehalt an Struktureinheiten, welche vom Novolak-Glycidylether herrühren, aufweist.

Nach der Herstellung kann nicht umgesetztes Amin teilweise entfernt werden, insbesondere mittels Destillation. Bevorzugt wird nicht umgesetztes Amin nicht aus dem Addukt entfernt.

Bevorzugt hat das Addukt **AD** eine Viskosität bei 25 °C von kleiner als 100 Pa·s, besonders bevorzugt kleiner als 50 Pa·s, insbesondere kleiner als 30 Pa·s.

Bevorzugt liegt die Temperatur bei der Umsetzung zum Addukt im Bereich von 50 bis 140°C, besonders bevorzugt 60 bis 140°C, insbesondere 70 bis 120°C.

Dabei wird die Temperatur geeigneterweise so lange im genannten Bereich gehalten, bis die Epoxidgruppen grösstenteils umgesetzt sind.

Die Umsetzung kann gegebenenfalls in Anwesenheit eines Verdünners erfolgen, wobei als Verdünner auch sogenannte Lösemittel bezeichnet werden. Bevorzugt erfolgt die Umsetzung ohne die Verwendung eines Verdünners. Dadurch sind auf einfache Weise Härter für Epoxidharze zugänglich, welche frei von Verdünnern sind.

Besonders bevorzugt wird das Addukt **AD** hergestellt, indem die Aminmischung vorgelegt und der Novolak-Glycidylether zugemischt wird, wobei die Umsetzung bei einer Temperatur im Bereich von 60 bis 140 °C, insbesondere 70 bis 120 °C, und ohne Lösemittel oder Verdünner durchgeführt wird. Insbesondere wird die Aminmischung vorgelegt und auf eine Temperatur im Bereich von 60 bis 100 °C aufgeheizt, und anschliessend der Novolak-Glycidylether mit einer Temperatur im Bereich von 20 bis 140 °C, insbesondere 40 bis 120 °C, unter Rühren langsam zur Aminmischung zugegeben, wobei die Temperatur der Reaktionsmischung durch Kühlen und/oder langsamem Zudosieren des Novolak-Glycidlyethers im Bereich von 60 bis 140 °C, insbesondere 70 bis 120 °C, gehalten wird, bis die Epoxidgruppen mehrheitlich umgesetzt sind.

Das erhaltene Addukt **AD** ist typischerweise ein Gemisch enthaltend
- einfache Addukte, bei welchen jede Struktureinheit abgeleitet von Bis(6-aminohexyl)amin oder Aminen **A1** jeweils nur einfach alkyliert bzw. adduktiert vorliegt,
- höheren Addukten, bei welchen mindestens eine Struktureinheit abgeleitet von Bis(6-aminohexyl)amin oder Aminen **A1** mindestens doppelt alkyliert bzw. adduktiert vorliegt, und
- freies Bis(6-aminohexyl)amin und freies Amin **A1.**

Ein typisches einfaches Addukt mit einer Struktureinheit abgeleitet von einem Phenol-Novolak-Glycidylether mit 3 Epoxidgruppen pro Molekül und Struktureinheiten abgeleitet von Bis(6-aminohexyl)amin weist die folgende Formel auf

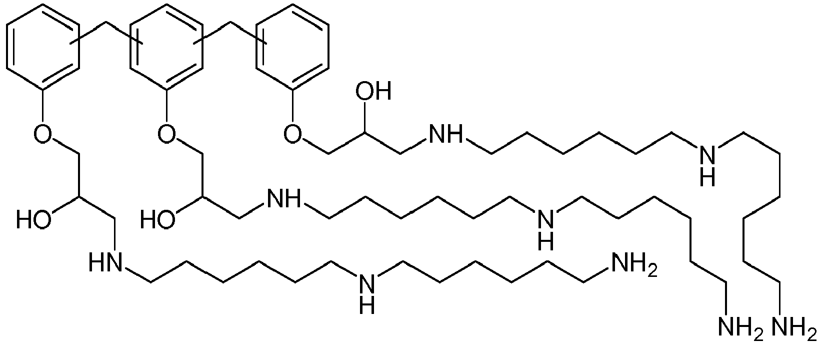

Ein weiterer Gegenstand der Erfindung ist ein Härter für Epoxidharze, umfassend das vorgängig beschriebene Addukt **AD** und mindestens ein weiteres von Bis(6-aminohexyl)amin verschiedenes Amin **A2,** welches im Mittel mindestens zwei, insbesondere mindestens drei, gegenüber Epoxidgruppen reaktive Aminwasserstoffe pro Molekül aufweist.

Bevorzugt ist das Amin **A2** nicht in einer technischen Qualität von Bis(6-amino-hexyl)amin enthalten.

Ein solcher Härter ist niedrigviskos und besonders stabil gegenüber Kristallisation in der Kälte.

Als Amin **A2** geeignet sind insbesondere die folgenden Polyamine:
- aliphatische, cycloaliphatische oder arylaliphatische primäre Diamine, insbesondere 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2(4),4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, Diethylentriamin (DETA), Triethylentetramin (TETA), Tetraethylenpentamin (TEPA), Pentaethylenhexamin (PEHA), Hexaethylenheptamin (HEHA), Dipropylentriamin (DPTA), N-(2-Aminoethyl)-1,3-propandiamin (N3-Amin), N,N'-Bis(3-aminopropyl)ethylendiamin (N4-Amin), N,N'-Bis(3-aminopropyl)-1,4-diaminobutan, N5-(3-Aminopropyl)-2-methyl-1,5-pentandiamin, N3-(3-Aminopentyl)-1,3-pentandiamin, N5-(3-Amino-1-ethylpropyl)-2-methyl-1,5-pentandiamin, N,N'-Bis(3-amino-1-ethylpropyl)-2-methyl-1,5-pentandiamin, 1,2-, 1,3- oder 1,4-Diaminocyclohexan, Bis(4-aminocyclohexyl)methan, Bis(4-amino-3-methylcyclohexyl)methan, Bis(4-amino-3-ethylcyclohexyl)methan, Bis(4-amino-3,5-dimethylcyclohexyl)methan, Bis(4-amino-3-ethyl-5-methylcyclohexyl)-methan, 1-Amino-3-aminomethyl-3,5,5-trimethylcyclohexan (Isophorondiamin oder IPDA), 2- oder 4-Methyl-1,3-diaminocyclohexan oder Mischungen davon, 1,3-Bis(aminomethyl)cyclohexan, 1,4-Bis(aminomethyl)cyclohexan, 2,5(2,6)-Bis(aminomethyl)bicyclo[2.2.1]heptan (NBDA), 3(4),8(9)-Bis(aminomethyl)tricyclo[5.2.1.0^{2,6}]decan, 1,4-Diamino-2,2,6-trimethylcyclohexan (TMCDA), 1,8-Menthandiamin, 3,9-Bis(3-aminopropyl)-2,4,8,10-tetraoxaspiro[5.5]undecan, 1,3-Bis(aminomethyl)benzol (MXDA), 1,4-Bis(amino-methyl)benzol, 2,5-Bis(aminomethyl)furan oder 2,5-Bis(aminomethyl)tetrahydrofuran;
- aliphatische, cycloaliphatische oder arylaliphatische primäre Triamine, insbesondere 4-Aminomethyl-1,8-octandiamin, 1,3,5-Tris(aminomethyl)benzol, 1,3,5-Tris(aminomethyl)cyclohexan, Tris(2-aminoethyl)amin, Tris(2-aminopropyl)amin, Tris(3-aminopropyl)amin oder N,N-Bis(2-aminoethyl)-N-(5-amino-3-aza-pentyl)amin;
- Ethergruppen-haltige aliphatische primäre Di- oder Triamine, insbesondere Bis(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin oder höhere Oligomere dieser Diamine, Bis(3-aminopropyl)polytetrahydrofurane oder andere Polytetrahydrofurandiamine, cycloaliphatische Ethergruppen-haltige Diamine aus der Propoxylierung und nachfolgenden Aminierung von 1,4-Dimethylolcyclohexan, erhältlich insbesondere als Jeffamine^{®} RFD-270 (von Huntsman), oder Polyoxyalkylendi- oder -triamine, welche typischerweise Produkte aus der Aminierung von Polyoxyalkylendi- oder -triolen darstellen und beispielsweise erhältlich sind unter dem Handelsnamen Jeffamine^{®} (von Huntsman), unter dem Handelsnamen Polyetheramine (von BASF) oder unter dem Handelsnamen PC Amine^{®} (von Nitroil). Insbesondere geeignete Polyoxyalkylendi- oder -triamine sind Jeffamine^{®} D-230, Jeff-amine^{®} D-400, Jeffamine^{®} D-205, Jeffamine^{®} EDR-104, Jeffamine^{®} EDR-148, Jeffamine^{®} EDR-176, Jeffamine^{®} T-403, oder entsprechende Amine von BASF oder Nitroil;
- Polyamine mit ein oder zwei sekundären Aminogruppen, insbesondere Produkte aus der reduktiven Alkylierung von primären aliphatischen Polyaminen mit Aldehyden oder Ketonen, insbesondere N-Benzyl-1,3-bis(aminomethyl)-benzol, N,N'-Dibenzyl-1,3-bis(aminomethyl)benzol, N-Benzyl-1,2-propandiamin, N-Benzyl-1,2-ethandiamin, oder partiell styrolisierte Polyamine wie zum Beispiel styrolisiertes MXDA (erhältlich als Gaskamine^{®} 240 von Mitsubishi Gas Chemical);
- tertiäre Aminogruppen aufweisende Polyamine mit primären aliphatischen Aminogruppen, wie insbesondere N,N-Dimethyl-1,3-propandiamin, N,N-Diethyl-1,3-propandiamin, N,N-Dimethyl-1,2-ethandiamin, N,N-Diethyl-1,2-ethandiamin, 2-(N,N-Diethylamino)ethylamin, 1-(N,N-Diethylamino)-4-aminopentan, 3-(3-(Dimethylamino)propylamino)propylamin (DMAPAPA), 2-(2-(Dimethylamino)ethylamino)ethylamin, 2-(3-(Dimethylamino)propylamino)-ethylamin, 3-(2-(Dimethylamino)ethylamino)propylamin, 2-(2-(Diethyl-amino)ethylamino)ethylamin, N-Aminoethylpiperazin, N-Aminopropylpiperazin, N,N'-Bis(aminopropyl)piperazin, N,N-Bis(3-aminopropyl)methylamin, N,N-Bis(3-aminopropyl)ethylamin, N,N-Bis(3-aminopropyl)propylamin, N,N-Bis(3-aminopropyl)cyclohexylamin, N,N-Bis(3-aminopropyl)-2-ethylhexylamin oder Produkte aus der doppelten Cyanoethylierung und nachfolgender Reduktion von Fettaminen, welche abgeleitet sind von natürlichen Fettsäuren, insbesondere N,N-Bis(3-aminopropyl)dodecylamin oder N,N-Bis(3-aminopropyl)talgalkylamin, erhältlich als Triameen^{®} Y12D bzw. Triameen^{®} YT (von Akzo Nobel).

Davon bevorzugt ist MPMD, TMD, DETA, TETA, TEPA, PEHA, HEHA, DPTA, N3-Amin, N4-Amin, 1,2-Diaminocyclohexan, Bis(4-aminocyclohexyl)methan, IPDA, 2- oder 4-Methyl-1,3-diaminocyclohexan oder Mischungen davon, 1,3-Bis(aminomethyl)cyclohexan, 1,4-Bis(aminomethyl)cyclohexan, NBDA, MXDA, Polyoxyalkylendi- oder -triamine mit einem mittleren Molekulargewicht im Bereich von 200 bis 500 g/mol, N,N-Dimethyl-1,3-propandiamin, 3-(3-(Dimethyl-amino)propylamino)propylamin (DMAPAPA) oder Mischungen aus zwei oder mehr dieser Amine. Diese Amine sind einfach verfügbar und ermöglichen niedrigviskose Härter mit hoher Reaktivität.

Bevorzugt weist der Härter eine Viskosität bei 25 °C im Bereich von 0.1 bis 5 Pa·s, besonders bevorzugt 0.1 bis 3 Pa·s, insbesondere 0.2 bis 1.5 Pa·s, auf.

Besonders bevorzugt ist das Amin A2 ausgewählt aus der Gruppe bestehend aus TMD, TETA, TEPA, PEHA, HEHA, N4-Amin, IPDA, 1,3-Bis(aminomethyl)-cyclohexan, 1,4-Bis(aminomethyl)cyclohexan, MXDA, Polyoxyalkylendi- und - triaminen mit einem mittleren Molekulargewicht im Bereich von 200 bis 500 g/mol und DMAPAPA. Ein solcher Härter ist geruchsarm, niedrigviskos und ermöglicht hohe Festigkeiten.

Davon bevorzugt ist in einer Ausführungsform TETA, TEPA, PEHA, HEHA oder N4-Amin. Ein solcher Härter ermöglicht eine besonders schnelle Aushärtung.

Davon bevorzugt ist in einer weiteren Ausführungsform ein Polyoxyalkylendi- oder -triamin mit einem mittleren Molekulargewicht im Bereich von 200 bis 500 g/mol, insbesondere Jeffamine^{®} D-230, Jeffamine^{®} D-400 oder Jeffamine^{®} T-403 (von Huntsman). Ein solcher Härter ermöglicht eine besonders hohe Dehnbarkeit.

Ganz besonders bevorzugt als Amin **A2** ist DMAPAPA. Ein solcher Härter ist besonders niedrigviskos, besonders stabil gegenüber Kristallisation in der Kälte und ermöglicht besonders hohe Druckfestigkeiten und besonders hohe Haftkräfte.

Der Härter kann eine Kombination aus zwei oder mehr Aminen **A2** enthalten. Dabei ist bevorzugt mindestens eines davon ausgewählt aus der oben genannten Gruppe. Insbesondere ist mindestens eines davon DMAPAPA.

Bevorzugt ist das Amin **A2** nicht mit dem Novolak-Glycidylether adduktiert. Das Amin **A2** war bei der Herstellung des Adduktes **AD** also bevorzugt nicht zugegen. Ein solcher Härter weist eine besonders tiefe Kristallisationstemperatur auf.

Zusätzlich kann der Härter weitere gegenüber Epoxiden reaktive Verbindungen enthalten, insbesondere die Folgenden:
- primäre Monoamine wie insbesondere Hexylamin, Benzylamin oder Furfurylamin;
- aromatische Polyamine, wie insbesondere m- und p-Phenylendiamin, 4,4'-, 2,4'- und/oder 2,2'-Diaminodiphenylmethan, 3,3'-Dichloro-4,4'-diaminodiphenylmethan (MOCA), 2,4- und/oder 2,6-Toluylendiamin, Mischungen von 3,5-Dimethylthio-2,4- und -2,6-toluylendiamin (erhältlich als Ethacure^{®} 300 von Albemarle), Mischungen von 3,5-Diethyl-2,4- und -2,6-toluylendiamin (DETDA), 3,3',5,5'-Tetraethyl-4,4'-diaminodiphenylmethan (M-DEA), 3,3',5,5'-Tetraethyl-2,2'-dichloro-4,4'-diaminodiphenylmethan (M-CDEA), 3,3'-Diisopropyl-5,5'-dimethyl-4,4'-diaminodiphenylmethan (M-MIPA), 3,3',5,5'-Tetraisopropyl-4,4'-diaminodiphenylmethan (M-DIPA), 4,4'-Diamino-diphenylsulfon (DDS), 4-Amino-N-(4-aminophenyl)benzolsulfonamid, 5,5'-Methylendianthranilsäure, Dimethyl-(5,5'-methylendianthranilat), 1,3-Propylen-bis(4-aminobenzoat), 1,4-Butylen-bis(4-aminobenzoat), Polytetramethy-lenoxid-bis(4-aminobenzoat) (erhältlich als Versalink^{®} von Air Products), 1,2-Bis(2-aminophenylthio)ethan, 2-Methylpropyl-(4-chloro-3,5-diaminobenzoat) oder tert.Butyl-(4-chloro-3,5-diaminobenzoat);
- weitere Addukte von Polyaminen mit Epoxiden oder Epoxidharzen, insbesondere Addukte von Bis(6-aminohexyl)amin oder der genannten Amine **A2** mit Dipropylenglykol- oder Polypropylengylkol-Diglydicylethern, oder Addukte von MXDA und/oder IPDA mit Diepoxiden wie insbesondere Bisphenol A- und/oder Bisphenol F-Diglycidylethern, oder Addukte von MPMD oder 1,2-Propylendiamin mit Monoepoxiden wie insbesondere Kresylglycidylether im Molverhältnis von ungefähr 1:1, oder Umsetzungsprodukte aus Aminen und Epichlorhydrin, insbesondere jenes von 1,3-Bis(aminomethyl)benzol, kommerziell erhältlich als Gaskamine^{®} 328 (von Mitsubishi Gas Chemical);
- Polyamidoamine, insbesondere Umsetzungsprodukte aus einer ein- oder mehrwertigen Carbonsäure, beziehungsweise deren Ester oder Anhydride, insbesondere einer Dimerfettsäure, mit einem im stöchiometrischen Überschuss eingesetzten aliphatischen, cycloaliphatischen oder aromatischen Polyamin, insbesondere einem Polyalkylenamin wie beispielsweise DETA oder TETA, insbesondere die kommerziell erhältlichen Polyamidoamine Versamid® 100, 125, 140 oder 150 (von Cognis), Aradur® 223, 250 oder 848 (von Huntsman), Euretek® 3607 oder 530 (von Huntsman) oder Becko-pox^{®} EH 651, EH 654, EH 655, EH 661 oder EH 663 (von Cytec); oder
- Mannich-Basen erhalten aus der Umsetzung von Phenolen mit Aldehyden, insbesondere Formaldehyd, und aliphatischen oder cycloaliphatischen Aminen, insbesondere Phenalkamine, d.h. Mannich-Basen von Cardanol (langkettigen Alk(en)ylphenolen und -resorcinen gewonnen durch thermische Behandlung von Cashewnussschalenöl-Extrakten, enthaltend als Hauptkomponente 3-(Pentadeca-8,11,14-trienyl)phenol), insbesondere die kommerziellen Typen Cardolite^{®} NX-5607 oder NX-5608 (von Cardolite), oder Aradur^{®} 3440, 3441, 3442 oder 3460 (von Huntsman), oder Beckopox^{®} EH 614, EH 621, EH 624, EH 628 oder EH 629 (von Cytec);
- flüssige Mercaptan-terminierte Polysulfid-Polymere, bekannt unter dem Handelsnamen Thiokol^{®} (von Morton Thiokol; beispielsweise erhältlich von SPI Supplies, oder von Toray Fine Chemicals), insbesondere die Typen LP-3, LP-33, LP-980, LP-23, LP-55, LP-56, LP-12, LP-31, LP-32 oder LP-2; sowie weiterhin bekannt unter dem Markennamen Thioplast^{®} (von Akzo Nobel), insbesondere die Typen G 10, G 112, G 131, G 1, G 12, G 21, G 22, G 44 oder G 4;
- Mercaptan-terminierte Polyoxyalkylen-Derivate, erhältlich beispielsweise durch Umsetzung von Polyoxyalkylendi- oder -triolen entweder mit Epichlorhydrin oder mit einem Alkylenoxid, gefolgt von Natriumhydrogensulfid, kommerziell erhältlich beispielsweise als Gabepro^{®} GPM-800 (von Gabriel Performance Products) oder unter dem Markennamen Capcure^{®} (von Cognis), insbesondere die Typen WR-8, LOF oder 3-800;
- Polyester von Thiocarbonsäuren, beispielsweise Pentaerythritoltetramercaptoacetat, Trimethylolpropantrimercaptoacetat, Glykoldimercaptoacetat, Pentaerythritoltetra-(3-mercaptopropionat), Trimethylolpropantri(3-mercaptopropionat) oder Glykoldi-(3-mercaptopropionat), oder Veresterungsprodukte von Polyoxyalkylendiolen oder -triolen, ethoxyliertem Trimethylolpropan oder Polyester-Diolen mit Thiocarbonsäuren wie Thioglykolsäure oder 2- oder 3-Mercaptopropionsäure; oder
- weitere Mercaptogruppen aufweisende Verbindungen, wie insbesondere 2,4,6-Trimercapto-1,3,5-triazin, 2,2'-(Ethylendioxy)-diethanthiol (Triethylenglykol-dimercaptan) oder Ethandithiol.

Bevorzugt weist der Härter einen Gehalt an Addukt **AD** im Bereich von 20 bis 80 Gewichts-%, insbesondere 30 bis 80 Gewichts-%, bezogen auf die im Härter enthaltenen, mit Epoxidgruppen reaktiven Verbindungen auf.

Bevorzugt weist der Härter einen Gehalt an Aminen **A2** im Bereich von 10 bis 70 Gewichts-%, insbesondere 15 bis 60 Gewichts-%, bezogen auf die im Härter enthaltenen mit Epoxidgruppen reaktiven Verbindungen auf.

Besonders bevorzugt weist der Härter einen Gehalt an DMAPAPA im Bereich von 5 bis 60 Gewichts-%, insbesondere 5 bis 50 Gewichts-%, bezogen auf die in der Härter-Komponente enthaltenen, mit Epoxidgruppen reaktiven Verbindungen auf.

Ein besonders bevorzugter Härter enthält
- 30 bis 80 Gewichts-% Addukt **AD,**
- 5 bis 60 Gewichts-% DMAPAPA, und
- 0 bis 40 Gewichts-% weitere Amine,
bezogen auf die im Härter enthaltenen, mit Epoxidgruppen reaktiven Verbindungen.

Der Härter kann weiterhin mindestens einen Beschleuniger enthalten. Als Beschleuniger geeignet sind Substanzen, welche die Reaktion zwischen Aminogruppen und Epoxidgruppen beschleunigen, insbesondere Säuren oder zu Säuren hydrolysierbare Verbindungen, insbesondere organische Carbonsäuren wie Essigsäure, Benzoesäure, Salicylsäure, 2-Nitrobenzoesäure, Milchsäure, organische Sulfonsäuren wie Methansulfonsäure, p-Toluolsulfonsäure, Sulfosalicylsäure oder 4-Dodecylbenzolsulfonsäure, Sulfonsäureester, andere organische oder anorganische Säuren wie insbesondere Phosphorsäure, oder Mischungen der vorgenannten Säuren und Säureester; tertiäre Amine wie insbesondere 1,4-Diazabicyclo[2.2.2]octan, Benzyldimethylamin, α-Methylbenzyldimethylamin, N,N,N',N'-Tetramethyl-1,2-ethandiamin, N,N,N',N'-Tetramethyl-1,3-propandiamin, N,N,N',N'-Tetramethyl-1,4-butandiamin, N,N,N',N'-Tetramethyl-1,6-hexandiamin, N,N,N',N',N"-Pentamethyldiethylentriamin, N,N,N',N',N"-Pentamethyldipropylentriamin, Bis(2-(N,N-dimethylamino)ethyl)amin, Bis(3-(N,N-dimethylamino)propyl)amin, Triethanolamin, Triisopropanolamin, N,N-Dimethylethanolamin, 3-(N,N-Dimethylamino)propan-1-ol, Imidazole wie insbesondere N-Methylimidazol, N-Vinylimidazol oder 1,2-Dimethylimidazol, Salze solcher tertiärer Amine, quaternäre Ammoniumsalze, wie insbesondere Benzyl-trimethylammoniumchlorid, Amidine wie insbesondere 1,8-Diazabicyclo[5.4.0]-undec-7-en, Guanidine wie insbesondere 1,1,3,3-Tetramethylguanidin, Phenole, insbesondere Bisphenole, Phenol-Harze oder Mannich-Basen wie insbesondere 2-(Dimethylaminomethyl)phenol, 2,4,6-Tris(dimethylaminomethyl)-phenol oder Polymere aus Phenol, Formaldehyd und N,N-Dimethyl-1,3-propandiamin, insbesondere 2,4,6-Tris(N,N-dimethyl-4-amino-2-aza-butyl)phenol, Phosphite wie insbesondere Di- oder Triphenylphosphite, oder Mercaptogruppen aufweisende Verbindungen. Als Beschleuniger bevorzugt sind Säuren, tertiäre Amine oder Mannich-Basen.

Am meisten bevorzugt ist Salicylsäure oder 2,4,6-Tris(dimethylaminomethyl)-phenol oder 2,4,6-Tris(N,N-dimethyl-4-amino-2-aza-butyl)phenol oder eine Kombination davon.

Der Härter kann weiterhin mindestens einen Verdünner enthalten, insbesondere Xylol, 2-Methoxyethanol, Dimethoxyethanol, 2-Ethoxyethanol, 2-Propoxyethanol, 2-Isopropoxyethanol, 2-Butoxyethanol, 2-Phenoxyethanol, 2-Benzyloxyethanol, Benzylalkohol, Ethylenglykol, Ethylenglykoldimethylether, Ethylenglykoldiethylether, Ethylenglykoldibutylether, Ethylenglykoldiphenylether, Diethylenglykol, Diethylenglykol-monomethylether, Diethylenglykol-monoethylether, Diethylenglykol-mono-n-butylether, Diethylenglykoldimethylether, Diethylenglykoldiethylether, Diethylenglykoldi-n-butylylether, Propylenglykolbutylether, Propylenglykolphenylether, Dipropylenglykol, Dipropylenglykolmonomethylether, Dipropylenglykoldimethylether, Dipropylenglykoldi-n-butylether, N-Methylpyrrolidon, Diphenylmethan, Diisopropylnaphthalin, Erdölfraktionen wie zum Beispiel Solvesso^{®}-Typen (von Exxon), Alkylphenole wie tert.Butylphenol, Nonylphenol, Dodecylphenol und Cardanol (aus Cashewnussschalen-Öl, enthaltend als Hauptbestandteil 3-(8,11,14-Pentadecatrienyl)phenol, erhältlich beispielsweise als Cardolite NC-700 von Cardolite Corp., USA), styrolisiertes Phenol, Bisphenole, aromatische Kohlenwasserstoffharze, insbesondere Phenolgruppen-haltige Typen, alkoxyliertes Phenol, insbesondere ethoxyliertes oder propoxyliertes Phenol, insbesondere 2-Phenoxyethanol, Adipate, Sebacate, Phthalate, Benzoate, organische Phosphor- oder Sulfonsäureester oder Sulfonamide.

Bevorzugt enthält der Härter keinen oder nur einen geringen Gehalt an Verdünnern. Bevorzugt enthält der Härter maximal 25 Gewichts-%, besonders bevorzugt maximal 10 Gewichts-%, insbesondere maximal 5 Gewichts-%, Verdünner. Insbesondere ist der Härter frei von Verdünnern. Ein solcher Härter ist besonders geeignet für emissionsarme oder emissionsfreie Epoxidharz-Produkte.

Bevorzugt ist der Härter weitgehend frei von Aminen mit einem Molekulargewicht unterhalb von 120 g/mol. Bevorzugt enthält er weniger als 2 Gewichts-%, insbesondere weniger als 1 Gewichts-%, Amine mit einem Molekulargewicht unterhalb von 120 g/mol. Ein solcher Härter ist besonders geruchsarm.

Ein weiterer Gegenstand der Erfindung ist eine Epoxidharz-Zusammensetzung umfassend
- eine Harz-Komponente enthaltend mindestens ein Epoxidharz und
- eine Härter-Komponente enthaltend das beschriebene Addukt **AD.**

Als Epoxidharz sind übliche technische Epoxidharze geeignet. Diese werden auf bekannte Art und Weise erhalten, zum Beispiel aus der Oxidation der entsprechenden Olefine oder aus der Reaktion von Epichlorhydrin mit den entsprechenden Polyolen, Polyphenolen oder Aminen.

Als Epoxidharz besonders geeignet sind sogenannte Polyepoxid-Flüssigharze, im folgenden als "Flüssigharz" bezeichnet. Diese weisen eine Erstarrungstemperatur unterhalb von 25°C auf.

Ebenfalls möglich als Epoxidharz sind sogenannte Festharze, welche eine Erstarrungstemperatur oberhalb von 25°C aufweisen und sich zu bei 25°C schüttfähigen Pulvern zerkleinern lassen.

Geeignete Epoxidharze sind insbesondere aromatische Epoxidharze, insbesondere die Glycidylisierungsprodukte von:
- Bisphenol-A, Bisphenol-F oder Bisphenol-A/F, wobei A für Aceton und F für Formaldehyd steht, welche als Edukte zur Herstellung dieser Bisphenole dienten. Im Fall von Bisphenol-F können auch Stellungsisomere vorhanden sein, insbesondere abgeleitet von 2,4'- oder 2,2'-Hydroxyphenylmethan.
- Dihydroxybenzol-Derivaten wie Resorcin, Hydrochinon oder Brenzkatechin;
- weiteren Bisphenolen oder Polyphenolen wie Bis(4-hydroxy-3-methylphenyl)methan, 2,2-Bis(4-hydroxy-3-methylphenyl)propan (Bisphenol-C), Bis-(3,5-dimethyl-4-hydroxyphenyl)methan, 2,2-Bis(3,5-dimethyl-4-hydroxyphenyl)propan, 2,2-Bis(3,5-dibromo-4-hydroxyphenyl)propan, 2,2-Bis(4-hydroxy-3-tert.butylphenyl)propan, 2,2-Bis(4-hydroxyphenyl)butan (Bisphenol-B), 3,3-Bis(4-hydroxyphenyl)pentan, 3,4-Bis(4-hydroxyphenyl)hexan, 4,4-Bis(4-hydroxyphenyl)heptan, 2,4-Bis(4-hydroxyphenyl)-2-methylbutan, 2,4-Bis-(3,5-dimethyl-4-hydroxyphenyl)-2-methylbutan, 1,1-Bis(4-hydroxyphenyl)-cyclohexan (Bisphenol-Z), 1,1-Bis(4-hydroxyphenyl)-3,3,5-trimethylcyclohexan (Bisphenol-TMC), 1,1-Bis(4-hydroxyphenyl)-1-phenylethan, 1,4-Bis[2-(4-hydroxyphenyl)-2-propyl]benzol (Bisphenol-P), 1,3-Bis[2-(4-hydroxyphenyl)-2-propyl]benzol (Bisphenol-M), 4,4'-Dihydroxydiphenyl (DOD), 4,4'-Dihydroxybenzophenon, Bis(2-hydroxynaphth-1-yl)methan, Bis(4-hydroxynaphth-1-yl)methan, 1,5-Dihydroxynaphthalin, Tris(4-hydroxyphenyl)methan, 1,1,2,2-Tetrakis(4-hydroxyphenyl)ethan, Bis(4-hydroxyphenyl)ether oder Bis(4-hydroxyphenyl)sulfon;
- Kondensationsprodukten von Phenolen mit Formaldehyd, die unter sauren Bedingungen erhalten werden, wie Phenol-Novolaken oder Kresol-Novolaken, auch Epoxid Novolak Harze oder Novolak-Glycidylether genannt;
- aromatischen Aminen, wie Anilin, Toluidin, 4-Aminophenol, 4,4'-Methylendiphenyldiamin, 4,4'-Methylendiphenyldi-(N-methyl)amin, 4,4'-[1,4-Phenylen-bis(1-methylethyliden)]bisanilin (Bisanilin-P) oder 4,4'-[1,3-Phenylen-bis(1-methylethyliden)]bisanilin (Bisanilin-M).

Weitere geeignete Epoxidharze sind aliphatische oder cycloaliphatische Polyepoxide, insbesondere
- Glycidylether von gesättigten oder ungesättigten, verzweigten oder unverzweigten, zyklischen oder offenkettigen di-, tri- oder tetrafunktionellen C₂-bis C₃₀-Alkoholen, insbesondere Ethylenglykol, Propylenglykol, Butylenglykol, Hexandiol, Octandiol, Polypropylenglykolen, Dimethylolcyclohexan, Neopentylglykol, Dibromoneopentylglykol, Rizinusöl, Trimethylolpropan, Trimethylolethan, Pentaerythrol, Sorbit oder Glycerin, oder alkoxyliertes Glycerin oder alkoxyliertes Trimethylolpropan;
- hydrierte Bisphenol-A-, -F- oder -A/F-Flüssigharze, beziehungsweise Glycidylisierungsprodukte von hydriertem Bisphenol-A, -F oder -A/F;
- N-Glycidylderivate von Amiden oder heterocyclischen Stickstoffbasen, wie Triglycidylcyanurat oder Triglycidylisocyanurat, oder Umsetzungsprodukte von Epichlorhydrin mit Hydantoin.
- Epoxidharze aus der Oxidation von Olefinen, wie insbesondere Vinylcylohexen, Dicyclopentadien, Cyclohexadien, Cyclododecadien, Cyclododecatrien, Isopren, 1,5-Hexadien, Butadien, Polybutadien oder Divinylbenzol.

Als Epoxidharz in der Harz-Komponente bevorzugt ist ein Flüssigharz auf der Basis eines Bisphenols, insbesondere ein Diglycidylether von Bisphenol-A, Bisphenol-F oder Bisphenol-A/F, wie sie kommerziell beispielsweise von Dow, Olin, Huntsman oder Momentive erhältlich sind. Diese Flüssigharze weisen eine für Epoxidharze niedrige Viskosität und im ausgehärteten Zustand gute Eigenschaften als Beschichtung auf. Sie können Anteile von Bisphenol A-Festharz oder Novolak-Glycidylethern enthalten.

Die Harz-Komponente kann einen Reaktivverdünner, insbesondere einen mindestens eine Epoxidgruppe aufweisenden Reaktivverdünner, enthalten. Als Reaktivverdünner geeignet sind insbesondere die Glycidylether von ein- oder mehrwertigen Phenolen oder aliphatischen oder cycloaliphatischen Alkoholen, wie insbesondere die bereits genannten Polyglycidylether von Di- oder Polyolen, insbesondere 1,4-Butandiol-Diglycidylether, 1,6-Hexandiol-Diglycidylether oder Glycidylether von Glycerol, Polyglycerol oder Trimethylolpropan, oder Phenylglycidylether, Kresylglycidylether, Guaiacolglycidylether, 4-Methoxyphenylglycidylether, p-n-Butylphenylglycidylether, p-tert.Butylphenylglycidylether, 4-Nonylphenylglycidylether, 4-Dodecylphenylglycidylether, Cardanolglycidylether, Benzylglycidylether, Allylglycidylether, Butylglycidylether, Hexylglycidylether, 2-Ethylhexylglycidylether, oder Glycidylether von natürlichen Alkoholen wie insbesondere C₈- bis C₁₀-Alkylglycidylether oder C₁₂- bis C₁₄-Alkylglycidyl-ether.

Bevorzugt enthält die Harz-Komponente mindestens einen Reaktivverdünner, insbesondere einen Diglycidylether. Ein solcher Reaktivverdünner verbessert die Verarbeitbarkeit, ohne die Festigkeit allzusehr zu beeinträchtigen.

Die Härter-Komponente umfasst bevorzugt den vorgängig beschriebenen Härter.

Gegebenenfalls umfasst die Härter-Komponente weitere Zusätzen, wie insbesondere Füllstoffen, Pigmenten, Fasern, Stabilisatoren und/oder oberflächenaktiven Substanzen.

Die Epoxidharz-Zusammensetzung kann zusätzliche Bestandteile enthalten, wobei diese als Bestandteil der Harz-Komponente und/oder der Härter-Komponente und/oder als separate Komponente vorhanden sein können. Gegenüber Epoxidgruppen reaktive Bestandteile sind bevorzugt Bestandteil der Härter-Komponente, gegenüber Aminogruppen reaktive Bestandteile sind bevorzugt Bestandteil der Harz-Komponente.

Bevorzugt enthält die Epoxidharz-Zusammensetzung mindestens ein Thixotropiermittel. Als Thixotropiermittel geeignet sind insbesondere pyrogene Kieselsäuren. Besonders geeignet sind Thixotropiermittel, welche die Thixotropie erst durch das Mischen der Komponenten ("in situ") aufbauen. Bevorzugte in situ-Thixotropiermittel sind Kombinationen von pyrogenen Kieselsäuren mit Glykolen und/oder Polyethyleniminen, wobei die pyrogene Kieselsäure in der ersten Komponente und das Glykol oder Polyethylenimin in der zweiten Komponente enthalten sind. Als pyrogene Kieselsäure bevorzugt sind unmodifizierte (hydrophile) Typen. Als Glykol bevorzugt sind Polyethylenglykole. Als Polyethylenimin bevorzugt sind Polyethylenimine mit mittlerem Molekulargewicht im Bereich von 800 bis 2'000'000, insbesondere 2000 bis 750'000, besonders bevorzugt 5000 bis 100'000, g/mol, wie sie kommerziell unverdünnt oder als wässrige Lösung erhältlich sind, beispielsweise unter dem Markennamen Lupasol^{®} (von BASF) oder Epomin^{®} (von Nippon Shokubai). Ebenfalls geeignet sind Kombinationen von pyrogenen Kieselsäuren mit Additiven wie insbesondere BYK^{®}-R 605, BYK^{®}-R 607 oder BYK^{®}-R 608 (alle von BYK Additives and Instruments). Besonders bevorzugt sind Kombinationen aus unmodizierter pyrogener Kieselsäure, insbesondere die Typen Aerosil^{®} 200 (von Evonik Industries), HDK^{®} N20 (von Wacker Chemie), CAB-O-SIL^{®} M-5 (von Cabot) oder REOLOSIL^{®} QS-102 (von Akpa Kimya), mit Polyethyleniminen, insbesondere die Typen Lupasol^{®} WF, Lupasol^{®} HF (alle von BASF) oder Epomin^{®} SP-200 (von Nippon Shokubai).

Bevorzugt enthält die Epoxidharz-Zusammensetzung zusätzlich mindestens einen anorganischen Füllstoff. Als anorganischer Füllstoff geeignet ist insbesondere gemahlenes oder gefälltes Calciumcarbonat, welches gegebenenfalls mit Fettsäure, insbesondere Stearaten, beschichtet ist, Baryt (Schwerspat), Talk, Quarzmehl, Quarzsand, Siliciumcarbid, Eisenglimmer, Dolomit, Wollastonit, Kaolin, Mica (Kalium-Aluminium-Silikat), Molekularsieb, Aluminiumoxid, Aluminiumhydroxid, Magnesiumhydroxid, Kieselsäure, Zement, Gips, Flugasche. Als anorganischer Füllstoff bevorzugt sind silikatische Füllstoffe, insbesondere Quarzmehl, Quarzsand, Siliciumcarbid, Wollastonit oder Mica.

Gegebenenfalls enthält die Epoxidharz-Zusammensetzung weitere Inhaltsstoffe, insbesondere ausgewählt aus den folgenden Hilfs- und Zusatzstoffen:
- Verdünner, insbesondere die bereits genannten;
- Beschleuniger, insbesondere die bereits genannten;
- Fasern, insbesondere Glasfasern, Kohlefasern, Metallfasern, Keramikfasern oder Kunststofffasern wie Polyamidfasern oder Polyethylenfasern;
- Pigmente, insbesondere Titandioxid, Eisenoxide oder Chrom(III)oxid;
- Rheologie-Modifizierer, insbesondere Verdicker oder Antiabsetzmittel;
- Haftverbesserer, insbesondere Organoalkoxysilane;
- Stabilisatoren gegen Oxidation, Wärme, Licht oder UV-Strahlung;
- flammhemmende Substanzen;
- oberflächenaktive Substanzen, insbesondere Netzmittel, Verlaufsmittel, Entlüftungsmittel oder Entschäumer; und
- Biozide, wie beispielsweise Algizide oder Fungizide.

In der Epoxidharz-Zusammensetzung liegt das Verhältnis der Anzahl der gegenüber Epoxidgruppen reaktiven Aminwasserstoffe gegenüber der Anzahl Epoxidgruppen bevorzugt im Bereich von 0.7 bis 1.5, insbesondere 0.8 bis 1.2.

Die Komponenten der Epoxidharz-Zusammensetzung werden in voneinander getrennten Gebinden gelagert. Ein geeignetes Gebinde zum Lagern der Harz- oder der Härter-Komponente ist insbesondere ein Fass, ein Hobbock, ein Beutel, ein Eimer, eine Büchse, eine Kartusche oder eine Tube. Die Komponenten sind lagerfähig, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern. Zur Anwendung der Epoxidharz-Zusammensetzung werden die Harz- und die Härter-Komponente und eine gegebenenfalls vorhandene Füllstoff-Komponente kurz vor oder während der Applikation miteinander vermischt. Das Mischungsverhältnis zwischen den Komponenten wird bevorzugt so gewählt, dass die gegenüber Epoxidgruppen reaktiven Gruppen der Härter-Komponente in einem geeigneten Verhältnis zu den Epoxidgruppen der Harz-Komponente stehen, wie vorgängig beschrieben. In Gewichtsteilen liegt das Mischungsverhältnis zwischen der Harz-Komponente und der Härter-Komponente üblicherweise im Bereich von 1:10 bis 10:1, insbesondere 10:1 bis 1:1.

Das Vermischen der Komponenten erfolgt mittels eines geeigneten Verfahrens. Die Vermischung kann kontinuierlich oder batchweise erfolgen. Falls das Vermischen vor der Applikation erfolgt, muss darauf geachtet werden, dass zwischen dem Vermischen der Komponenten und der Applikation nicht zu viel Zeit vergeht, da es dadurch zu Störungen, beispielsweise einem verlangsamten oder unvollständigen Aufbau der Haftung, kommen kann. Die Vermischung erfolgt insbesondere bei Umgebungstemperatur, welche typischerweise im Bereich von etwa 0 bis 40°C, bevorzugt bei etwa 5 bis 30°C, liegt.

Beim Vermischen der Komponenten beginnt die Aushärtung durch chemische Reaktion. Dabei reagieren die Epoxidgruppen mit den Aminwasserstoff tragenden Aminogruppen und gegebenenfalls vorhandenen weiteren gegenüber Epoxidgruppen reaktiven Gruppen unter Ringöffnung zu Aminoalkohol-Einheiten. Weitere Epoxidgruppen reagieren untereinander unter anionischer Polymerisation. Als Ergebnis dieser Reaktionen härtet die Zusammensetzung zu einem vernetzten Material aus. Dem Fachmann ist bekannt, dass primäre Aminogruppen gegenüber Epoxidgruppen difunktionell sind.

Die Aushärtung erfolgt insbesondere bei Umgebungstemperatur. Sie erstreckt sich typischerweise über einige Stunden bis Tage, bis sie unter den gegebenen Bedingungen weitgehend abgeschlossen ist. Wichtige Einflussgrössen sind dabei die Temperatur, die Stöchiometrie und die Anwesenheit von Beschleunigern.

Als Ergebnis der Aushärtungsreaktion wird eine ausgehärtete Epoxidharz-Zusammensetzung erhalten.

Ein weiterer Gegenstand der Erfindung ist somit eine ausgehärtete Epoxidharz-Zusammensetzung, erhalten aus der beschriebenen Epoxidharz-Zusammensetzung nach dem Mischen der Komponenten und deren Aushärtung.

Die Epoxidharz-Zusammensetzung kann verwendet werden als Imprägnier- oder Injektionsharz, als Vergussmasse, als Formharz oder Matrixharz für Composites oder Leiterplatten, als Belag, Schutzanstrich oder Primer, oder als Klebstoff für die industrielle Fertigung, beispielsweise für Rotorblätter von Windturbinen, Flugzeugrümpfe, Fahrzeugkarossen oder elektronische Bauteile, oder besonders vorteilhaft als Klebstoff an Bauwerken.

Bevorzugt wird die Epoxidharz-Zusammensetzung als Klebstoff verwendet, insbesondere als Klebstoff im Baubereich.

Bevorzugt enthält die Epoxidharz-Zusammensetzung bei der Verwendung als Klebstoff mindestens ein Thixotropiermittel, insbesondere mindestens ein in situ-Thixotropiermittel.

Bevorzugt enthält die Epoxidharz-Zusammensetzung bei der Verwendung als der Klebstoff mindestens einen anorganischen Füllstoff, insbesondere einen silikatischen Füllstoff wie insbesondere Quarzmehl, Quarzsand, Siliciumcarbid, Wollastonit oder Mica.

Bevorzugt enthält die Epoxidharz-Zusammensetzung bei der Verwendung als Klebstoff im Bereich von 1 bis 90, besonders bevorzugt 20 bis 90, insbesondere 50 bis 90, Gewichts-% anorganische Füllstoffe.

In einer bevorzugten Ausführungsform umfasst die Epoxidharz-Zusammensetzung mindestens 50 Gewichts-% anorganische Füllstoffe. Eine solche Zusammensetzung ist besonders geeignet als Klebstoff, insbesondere als sogenannter Klebemörtel. Bevorzugt enthält sowohl die Harz- als auch die Härter-Komponente anorganische Füllstoffe.

Bevorzugt umfasst die Epoxidharz-Zusammensetzung dabei 50 bis 90 Gewichts-% anorganische Füllstoffe, wobei sowohl die Harz- als auch die Härter-Komponente, jede für sich, bevorzugt 50 bis 90 Gewichts-% anorganische Füllstoffe enthalten.

Bevorzugt ist dabei mindestens ein Quarzmehl und/oder mindestens ein Quarzsand vorhanden.

Zusätzlich enthält eine solche Zusammensetzung bevorzugt mindestens einen weiteren anorganischen Füllstoff, insbesondere ein gefälltes, mit Fettsäure beschichtetes Calciumcarbonat und/oder eine pyrogene Kieselsäure. Diese können das Absetzen des Quarz-Füllstoffes in den Komponenten während der Lagerzeit vermindern.

Nach dem Vermischen der Komponenten weist die Epoxidharz-Zusammensetzung eine flüssige oder pastöse Konsistenz auf.

Bei der Verwendung als Klebstoff wird die frisch vermischte Zusammensetzung innerhalb ihrer Offenzeit auf mindestens eines der zu verklebenden Substrate aufgetragen und die beiden Substrate innerhalb der Offenzeit der Zusammensetzung zu einer Verklebung gefügt.

Als "Offenzeit" wird dabei die Zeitspanne zwischen dem Mischen der Komponenten und dem Zeitpunkt, ab welchem keine ausreichende Verformbarkeit des Klebstoffs und/oder kein ausreichender Haftungsaufbau zu den Substraten mehr gewährleistet ist.

Die frisch vermischte Zusammensetzung wird insbesondere mittels Pinsel, Rolle, Spatel, Rakel, Kelle, oder aus einer Tube, Kartusche oder Dosiervorrichtung appliziert bzw. aufgetragen.

Die Epoxidharz-Zusammensetzung wird bevorzugt bei Temperaturen im Bereich von 0 bis 100°C, bevorzugt 5 bis 80°C, insbesondere 10 bis 50°C, verwendet, besonders bevorzugt bei Umgebungstemperaturen im Freien, in gedeckten Unterständen oder in Gebäuden, bevorzugt im Bereich von 0 bis 40°C, insbesondere 5 bis 30°C.

Die Epoxidharz-Zusammensetzung ist besonders geeignet als Klebstoff für Verwendungen in der Bauindustrie, insbesondere
- für die Armierung von Bauwerken mittels Stahllamellen oder Lamellen aus Kohlefaser-verstärkten Composite-Kunststoffen (CFK),
- für Konstruktionen, welche geklebte Beton-Fertigteile enthalten, insbesondere Brücken oder Betontürme für beispielsweise Windkraftanlagen, Schächte, Rohrleitungen oder Tunnels, oder für Konstruktionen, welche geklebte Natursteine, keramische Elemente oder Teile aus Faserzement, Stahl, Gusseisen, Aluminium, Holz oder Polyester enthalten,
- für die Verankerung von Dübeln oder Stahlstäben in Bohrlöchern,
- für die Fixierung von beispielsweise Geländern, Brüstungen oder Türrahmen,
- für Reparaturen wie insbesondere die Verfüllung von Kanten, Löchern oder Fugen bei der Betoninstandsetzung,
- für das Aufkleben von Folien aus Polyvinylchlorid (PVC), flexibilisiertem Polyolefin (Combiflex^{®}), haftungsmodifiziertem chlorsulfoniertem Polyethylen (Hypalon^{®}) auf Beton oder Stahl.

Weitere Einsatzgebiete betreffen das strukturelle Kleben in der Bau- oder Fertigungsindustrie, insbesondere als Klebemörtel, Montageklebstoff, Armierungsklebstoff wie insbesondere für das Verkleben von Lamellen aus CFK oder Stahl auf Beton, Mauerwerk oder Holz, als Element-Klebstoff für beispielsweise Brückenelemente, Sandwichelementklebstoff, Fassadenelementklebstoff, Verstärkungsklebstoff, Karrosserieklebstoff oder Halbschalenklebstoff für Rotorblätter von Windturbinen.

Ebenfalls geeignet ist die Zusammensetzung für das Verfüllen von Hohlräumen wie Risse, Spalten oder Bohrlöcher, wobei die Zusammensetzung in den Hohlraum gefüllt oder injiziert wird und nach der Aushärtung diesen ausfüllt und die Flanken des Hohlraums kraftschlüssig miteinander verbindet bzw. verklebt.

Besonders geeignet ist die Zusammensetzung für Anwendungen, bei welchen bei tiefen Temperaturen, insbesondere im Bereich von 0 bis 10 °C, ein schneller Aufbau der Festigkeit erfolgen soll, wie beispielsweise bei der Montage von Brücken oder anderen Bauten im Freien.

Weiterhin besonders geeignet ist sie für Anwendungen, bei welchen eine besonders hohe Druckfestigkeit erreicht werden soll, insbesondere als Klebemörtel für das Aufeinanderkleben von Betonelementen zu turmartigen Konstruktionen, wobei sich eine Zusammensetzung mit sehr hoher Druckfestigkeit insbesondere für das Verkleben von Elementen aus hochfestem Beton eignet.

Die Epoxidharz-Zusammensetzung wird insbesondere verwendet in einem Verfahren zum Verkleben, umfassend die Schritte
- Mischen der Komponenten mit einer geeigneten Methode und
entweder
- Applizieren der gemischten Zusammensetzung auf mindestens eines der zu verklebenden Substrate,
- Fügen der Substrate zu einer Verklebung innerhalb der Offenzeit der Zusammensetzung,
oder
- Applizieren der gemischten Zusammensetzung in einen Hohlraum oder Spalt zwischen zwei Substraten,
- gegebenenfalls Einfügen eines Ankers in den Hohlraum oder Spalt innerhalb der Offenzeit der Zusammensetzung,
gefolgt von der Aushärtung der Zusammensetzung.

Als "Anker" wird dabei insbesondere ein Armierungseisen, ein Gewindestab oder ein Bolzen bezeichnet. Ein solcher wird insbesondere so in einer Mauer, Wand, Decke oder in einem Fundament eingeklebt bzw. verankert, dass ein Teil davon kraftschlüssig verklebt ist und ein Teil davon vorsteht und konstruktiv belastet werden kann.

Bevorzugt erfolgt dabei die Applikation und Aushärtung der Zusammensetzung bei Umgebungstemperatur, insbesondere bei einer Temperatur im Bereich von 0 bis 40 °C, insbesondere 5 bis 30 °C. Dies ermöglicht eine besonders einfache Handhabung der Zusammensetzung bzw. des Klebstoffs und ist insbesondere im Freien, auf Baustellen und in ungeheizten Industriehallen vorteilhaft.

Die Applikation der gemischten Zusammensetzung erfolgt auf mindestens ein Substrat, wobei die Folgenden besonders geeignet sind:
- Glas, Glaskeramik, Beton, Mörtel, Zement-Estrich, Anhydrit-Estrich, Magnesia-Estrich, Backstein, Ziegel, Gips oder Natursteine wie Granit oder Marmor;
- Metalle oder Legierungen wie Aluminium, Eisen, Stahl oder Buntmetalle, oder oberflächenveredelte Metalle oder Legierungen wie verzinkte oder verchromte Metalle;
- Holz, mit Harzen, beispielsweise Phenol-, Melamin- oder Epoxidharzen, gebundene Holzwerkstoffe oder weitere sogenannte Polymer-Composites;
- Kunststoffe, insbesondere Hart- oder Weich-PVC, ABS, Polycarbonat (PC), Polyamid (PA), Polyester, PMMA, Epoxidharze, PUR, POM, PO, PE, PP, EPM oder EPDM, wobei die Kunststoffe gegebenenfalls mittels Plasma, Corona oder Flammen oberflächenbehandelt sind;
- Faserverstärkte Kunststoffe, wie Kohlefaser-verstärkte Composite-Kunststoffe (CFK), Glasfaser-verstärkte Kunststoffe (GFK) oder Sheet Moulding Compounds (SMC);
- beschichtete Substrate, wie pulverbeschichtete Metalle oder Legierungen;
- Farben oder Lacke.

Die Substrate können bei Bedarf vor dem Applizieren der Zusammensetzung vorbehandelt werden. Derartige Vorbehandlungen umfassen insbesondere physikalische und/oder chemische Reinigungsverfahren, beispielsweise Schleifen, Sandstrahlen, Kugelstrahlen, Bürsten und/oder Abblasen, sowie weiterhin Behandeln mit Reinigern oder Lösemitteln oder das Aufbringen eines Haftvermittlers, einer Haftvermittlerlösung oder eines Primers.

Poröse mineralische Substrate sind bevorzugt so vorbehandelt, dass eine offenporige, weitgehend staubfreie Oberfläche ohne Zementhaut vorliegt.

Aus der Verwendung als Klebstoff entsteht ein verklebter Artikel. Dabei handelt es sich insbesondere um ein Haus, ein Badezimmer, eine Küche, eine Treppe, ein Dach, ein Balkon, eine Terrasse, ein Parkdeck, eine Brücke, ein Schacht, eine Rohrleitung, ein Tunnel, ein Sandwichelement einer Leichtbaustruktur, ein Solarpanel wie Photovoltaik- oder Solarthermie-Module, eine Fassade, ein Haushaltsapparat, ein Rotorblatt einer Windturbine, einen Betonturm, ein Automobil, einen Bus, einen Lastkraftwagen, ein Schienenfahrzeug, ein Schiff, ein Flugzeug, einen Helikopter, oder ein Anbauteil davon.

Ein weiterer Gegenstand der Erfindung ist somit ein verklebter Artikel, erhalten aus der Verwendung der Zusammensetzung im beschriebenen Verfahren zum Verkleben.

Die Epoxidharz-Zusammensetzung zeichnet sich durch einen schnellen Festigkeitsaufbau, eine hohe Endfestigkeit und hohe Haftkräfte aus.

Insbesondere erreicht die Epoxidharz-Zusammensetzung bei der Aushärtung bei Raumtemperatur nach 2 Tagen eine Zugfestigkeit, bestimmt wie in den Beispielen beschrieben, von mindestens 25 MPa, insbesondere mindestens 30 MPa.

Insbesondere erreicht die Epoxidharz-Zusammensetzung bei der Aushärtung bei 5 °C nach 3 Tagen eine Zugfestigkeit, bestimmt wie in den Beispielen beschrieben, von mindestens 25 MPa.

Besonders bevorzugt wird die Epoxidharz-Zusammensetzung verwendet zur Herstellung einer Klebeverbindung mit einer Druckfestigkeit von mindestens 120 MPa, bevorzugt mindestens 125 MPa, besonders bevorzugt mindestens 130 MPa, bestimmt nach ASTM D695 an während 7 Tagen bei Raumtemperatur ausgehärteten Prüfkörpern bei einer Prüfgeschwindigkeit von 1.3 mm/min, wie in den nachfolgenden Beispielen beschrieben. Bevorzugt ist diese Klebeverbindung Bestandteil eines Betonturms einer Windkraftanlage. Bevorzugt enthält die Epoxidharz-Zusammensetzung dabei in der Härter-Komponente 3-(3-(Dimethylamino)propylamino)propylamin (DMAPAPA).

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

"AHEW" steht für das Aminwasserstoff-Equivalentgewicht.

"EEW" steht für das Epoxid-Equivalentgewicht.

Als "Normklima" wird eine Temperatur von 23±1 °C und eine relative Luftfeuchtigkeit von 50±5% bezeichnet. "NK" steht für "Normklima".

Die **Viskosität** wurde auf einem thermostatisierten Kegel-Platten-Viskosimeter Rheotec RC30 (Kegeldurchmesser 50 mm, Kegelwinkel 1°, Kegelspitze-Platten-Abstand 0.05 mm) bei einer Scherrate von 10 s⁻¹ gemessen.

### Verwendete kommerzielle Substanzen:

- BA-DGE:: Bisphenol-A-Diglycidylether, EEW ca. 190 g/Eq (Araldite^{®} GY 250, von Huntsman).
- BuD-DGE:: 1,4-Butandiol-Diglycidylether, EEW ca.122 g/Eq (Araldite^{®} DY-D, von Huntsman).
- D.E.N.^{®} 438:: Epoxy-Novolak-Harz (Phenol-Novolak-Glycidylether), EEW 180 g/Eq, Funktionalität 3.6 (von Olin)
- Solvesso:: Lösemittel auf Basis aromatischer Kohlenwasserstoffe (Solvesso^{®} 150 ND, von ExxonMobil).
- BHMT-HP:: Bis(6-aminohexyl)amin mit einer Reinheit von ca. 98 Gewichts-%, AHEW ca. 43 g/Eq (Dytek^{®} BHMT-HP von Invista)
- BHMT-(50-78%):: technische Qualität von Bis(6-aminohexyl)amin mit einer Reinheit im Bereich von 50 bis 78 Gewichts-%, AHEW ca. 48 g/Eq (Dytek^{®} BHMT Amine (50-78%), von Invista)
- DMAPAPA:: 3-(3-(Dimethylamino)propylamino)propylamin, AHEW 53 g/Eq (DMAPAPA, von Arkema).
- TETA:: Triethylentetramin, AHEW ca. 27 g/Eq (technisch, von Huntsman)
- Quarzmehl:: Korngrösse 0 bis 75 µm
- Quarzsand:: Korngrösse 0.1 bis 0.3 mm

### Herstellung von Addukten:

### Addukt A-1:

77.5 g BHMT-(50-78%) wurden unter Stickstoffatmosphäre vorgelegt und auf 80 °C erwärmt. Unter Rühren wurden langsam 22.5 g auf 100 °C vorgeheiztes D.E.N.^{®} 438 zugegeben, wobei die Temperatur der Reaktionsmischung durch Kühlen zwischen 80 und 100 °C gehalten wurde. Die Reaktionsmischung wurde dann während 1 Stunde bei 80 bis 100 °C belassen und anschliessend auf Raumtemperatur abgekühlt. Es wurde eine dunkelgefärbte Flüssigkeit mit einer Viskosität bei 25 °C von 19.8 Pa·s und einem theoretischen AHEW von 67.1 g/Eq erhalten.

### Addukt A-2 (Ref.):

76.3 g BHMT-HP wurden unter Stickstoffatmosphäre vorgelegt und auf 80 °C erwärmt. Unter Rühren wurden langsam 22.5 g auf 100 °C vorgeheiztes D.E.N.^{®} 438 zugegeben, wobei die Temperatur der Reaktionsmischung durch Kühlen zwischen 80 und 100 °C gehalten wurde. Die Reaktionsmischung wurde dann während 1 Stunde bei 80 bis 100 °C belassen und anschliessend auf Raumtemperatur abgekühlt. Es wurde eine klare, gelbliche Flüssigkeit mit einer Viskosität bei 25 °C von 1.4 Pa·s und einem theoretischen AHEW von 60.8 g/Eq erhalten.

### Addukt A-3 (Ref.):

69.4 g TETA wurden unter Stickstoffatmosphäre vorgelegt und auf 80 °C erwärmt. Unter Rühren wurden langsam 30.6 g auf 100 °C vorgeheiztes D.E.N.^{®} 438 zugegeben, wobei die Temperatur der Reaktionsmischung durch Kühlen zwischen 80 und 100 °C gehalten wurde. Die Reaktionsmischung wurde dann während 1 Stunde bei 70 bis 90 °C belassen und anschliessend auf Raumtemperatur abgekühlt. Es wurde eine klare, gelbliche Flüssigkeit mit einer Viskosität bei 25 °C von 6.9 Pa·s und einem theoretischen AHEW von 41.7 g/Eq erhalten.

### Addukt A-4 (Ref.):

77.5 g BHMT-(50-78%) wurden unter Stickstoffatmosphäre vorgelegt und auf 80 °C erwärmt. Unter Rühren wurden langsam 22.5 g auf 60 °C vorgeheizter BA-DGE zugegeben, wobei die Temperatur der Reaktionsmischung durch Kühlen zwischen 60 und 90 °C gehalten wurde. Die Reaktionsmischung wurde dann während 1 Stunde bei 70 bis 90 °C belassen und anschliessend auf Raumtemperatur abgekühlt. Es wurde eine dunkelgefärbte Flüssigkeit mit einer Viskosität bei 25 °C von 8.8 Pa·s und einem theoretischen AHEW von 67.1 g/Eq erhalten.

Das Addukt **A-1** ist ein erfindungsgemässes Addukt **AD.** Die Addukte **A-2, A-3** und **A-4** sind Vergleichsbeispiele und mit "(Ref.)" gekennzeichnet.

### Herstellung von Härtern:

### Härter H-1 bis H-7

Für jeden Härter wurden das in der Tabelle 1 angegebene Addukt und die in der Tabelle 1 angegebenen weiteren Inhaltsstoffe in den angegebenen Mengen (in Gewichtsteilen) mittels eines Zentrifugalmischers (SpeedMixer™ DAC 150, FlackTek Inc.) vermischt und unter Ausschluss von Feuchtigkeit aufbewahrt.

Von jedem Härter wurde die Lagerstabilität bei 5°C und die Viskosität bei 25°C bestimmt.

Die **Lagerstabilität bei 5°C** wurde bestimmt, indem der Härter während 14 Tagen in einem verschlossenen Glasgebinde bei 5°C aufbewahrt und anschliessend optisch beurteilt wurde. Bestand der Härter aus einer homogenen Flüssigkeit, wurde die Lagerstabilität mit "ja" beurteilt, andernfalls mit "nein". Bei den getesteten nicht-stabilen Härtern wurde jeweils ein vollständiges oder teilweises Erstarren beobachtet.

Das berechnete AHEW, die Viskosität und die Lagerstabilität bei 5°C der hergestellten Härter sind in der Tabelle 1 angegeben.

Die mit "(Ref.)" bezeichneten Härter sind Vergleichsbeispiele.

**Tabelle 1: Zusammensetzung, AHEW und Viskosität der Härter H-1 bis H-7. ¹ teilweise fest**

| **Härter** | **H-1** | **H-2** (Ref.) | **H-3** (Ref.) | **H-4** (Ref.) | **H-5** | **H-6** (Ref.) | **H-7** (Ref.) |
|---|---|---|---|---|---|---|---|
| Addukt | **A-1** 70.0 | **A-2** 70.0 | **A-3** 65.0 | **A-4** 70 | **A-1** 80.0 | **A-2** 80.0 | **A-3** 80.0 |
| DMAPAPA | 30.0 | 30.0 | 35.0 | 30.0 | - | - | - |
| TETA | - | - | - | - | 20.0 | 20.0 | 20.0 |
| AHEW [g/Eq] | 62.1 | 58.3 | 45.1 | 62.0 | 51.7 | 48.7 | 37.6 |
| Viskosität (25°C) [Pa·s] | 0.57 | 0.20 | 0.36 | 0.37 | 1.47 | 0.53 | 1.75 |
| Lagerstabilität bei 5°C | ja | ja | ja | ja | ja | nein¹ | ja |

### Herstellung von Epoxidharz-Klebstoffen:

### Beispiele 1 bis 8

Für jedes Beispiel wurde eine Harz-Komponente (**Harz-Komp.**) hergestellt, indem die in der Tabelle 2 angegebenen Inhaltsstoffe der Harz-Komponente in den angegebenen Mengen (in Gewichtsteilen) mittels eines Zentrifugalmischers (SpeedMixer™ DAC 150, FlackTek Inc.) vermischt und unter Ausschluss von Feuchtigkeit aufbewahrt wurden.

Weiterhin wurde für jedes Beispiel eine Härter-Komponente (**Härter-Komp.**) hergestellt, indem die in der Tabelle 2 angegebenen Addukte und weiteren Inhaltsstoffe der Härter-Komponente in den angegebenen Mengen (in Gewichtsteilen) mittels des Zentrifugalmischers vermischt und unter Ausschluss von Feuchtigkeit aufbewahrt wurden.

Für jedes Beispiel wurden dann die Harz- und die Härter-Komponente mittels des Zentrifugalmischers zu einer homogenen Paste verarbeitet und diese unverzüglich folgendermassen geprüft:

Die mechanischen Eigenschaften wurden bestimmt, indem der gemischte Klebstoff im Normklima in eine Silikonform zu hantelförmigen Stäben mit einer Dicke von 10 mm, einer Länge von 150 mm, bei einer Steglänge von 80 mm und einer Stegbreite von 10 mm, appliziert und ausgehärtet wurden. Einige Zugstäbe wurden nach 2 Tagen und weitere Zugstäbe nach 7 Tagen Aushärtungszeit aus der Form gelöst und damit die **Zugfestigkeit** und die **Bruchdehnung (2d NK)** bzw. (**7d NK**) gemäss EN ISO 527 bei einer Zuggeschwindigkeit von 1 mm/min gemessen. Weitere solche Zugstäbe wurden hergestellt, indem die Komponenten vor dem Vermischen auf 5 °C gekühlt, dann gemischt, zu Zugstäben appliziert und diese bei 5 ° und ca. 70 % relativer Luftfeuchtigkeit ausgehärtet wurden. Nach 3 Tagen wurden die Zugstäbe aus der Form gelöst und wie beschrieben auf Zugfestigkeit und Bruchdehnung geprüft (**3d 5°C**). Die **Druckfestigkeit** (**2d NK; 7d NK**) wurde bestimmt, indem der gemischte Klebstoff im Normklima in einer Silikonform zu Quadern der Dimensionen 12.7 x 12.7 x 25.4 mm appliziert und diese im Normklima ausgehärtet wurden. Nach 2 und nach 7 Tagen wurden jeweils mehrere solche Quader aus der Form gelöst und nach ASTM D695 bei einer Prüfgeschwindigkeit von 1.3 mm/min bis zur Zerstörung komprimiert, wobei der Wert für die Druckfestigkeit jeweils bei der maximalen Kraft abgelesen wurde. Weitere solche Quader wurden hergestellt, indem die Komponenten vor dem Vermischen auf 5 °C gekühlt, dann germischt, zu Quadern appliziert und diese bei 5 °C und ca. 70 % relativer Luftfeuchtigkeit ausgehärtet wurden. Nach 7 Tagen wurden einige der Quader aus der Form gelöst und wie beschrieben auf Druckfestigkeit geprüft (**7d 5 °C**), während weitere Quader zusätzlich während 7 Tagen im Nomklima gelagert und erst dann aus der Form gelöst und wie beschrieben auf Druckfestigkeit geprüft wurden (**7d 5°C+7d NK**). Eine grosse Abweichung zwischen dem Wert nach 7d 5°C+7d NK und dem Wert nach 7d NK ist ein Zeichen für Aushärtungsstörungen in der Kälte.

Zur Messung der Zugscherfestigkeit auf Stahl (**LSS** Stahl) wurden mehrere Verklebungen hergestellt, wobei der gemischte Klebstoff zwischen zwei mit Heptan entfettete Stahlbleche in einer Schichtdicke von 0.5 mm mit einer überlappenden Klebefläche von 10 x 25 mm aufgebracht wurde. Nach einer Aufbewahrungszeit von 7 Tagen im Normklima wurde die Zugscherfestigkeit nach DIN EN 1465 mit einer Zuggeschwindigkeit von 10 mm/min bestimmt. Zur Messung der Zugscherfestigkeit auf Kohlefaser-Verbundwerkstoff (CFK) (**LSS** CFK) wurden mehrere Verklebungen hergestellt, wobei der vermischte Klebstoff zwischen zwei mit Heptan entfettete Sika^{®} CarboDur^{®} S512 Lamellen in einer Schichtdicke von 0.5 mm mit einer überlappenden Klebefläche von 10 x 50 mm aufgebracht wurde. Nach einer Aufbewahrungszeit von 7 Tagen im NK wurde die Zugscherfestigkeit wie beschrieben bestimmt.

Zur Messung der Haftzug-Festigkeit zwischen Beton und Stahl (**Haftzug**) wurden mehrere Verklebungen hergestellt, indem jeweils einige Gramm des gemischten Klebstoffs auf eine mittels Stahlbürste gereinigte Betonplatte aufgetragen und darauf ein mit Aceton gereinigter Zylinder aus Stahl mit einem Durchmesser von 20 mm über dessen Grundfläche aufgeklebt wurde, wobei die Dicke der Klebefuge 2 mm betrug. Die Verklebungen wurden im Normklima gelagert. Nach 7 Tagen wurden sie in Anlehnung an DIN EN 4624 bei einer Prüfgeschwindigkeit von 2 mm/min bis zum Bruch auseinandergezogen, um die Festigkeit der Verklebung bei der maximalen Kraft zu bestimmen.

Der **Tg-**Wert (Glasübergangstemperatur) wurde mittels DSC an ausgehärteten Klebstoff-Proben bestimmt, welche 7 Tagen im Normklima gelagert waren, mit einem Mettler Toledo DSC 3+ 700 Gerät und dem Messprogramm (1) -10 °C während 2 min, (2) -10 bis 200 °C mit einer Aufheizrate von 10 K/min (= 1st run), (3) 200 bis -10 °C mit einer Kühlrate von -50 K/min, (4) -10 °C während 2 min, (5) -10 bis 180 °C mit einer Aufheizrate von 10 K/min (= 2nd run).

Die Resultate sind in der Tabellen 2 angegeben.

Die mit "(Ref.)" bezeichneten Beispiele sind Vergleichsbeispiele.

**Tabelle 2: Zusammensetzung und Eigenschaften der Beispiele 1 bis 8. "n.b." steht für "nicht bestimmt".**

| **Beispiel** | | **1** | **2 (Ref.)** | **3 (Ref.)** | **4 (Ref.)** | **5 (Ref.)** | **6** | **7 (Ref.)** | **8 (Ref.)** |
|---|---|---|---|---|---|---|---|---|---|
| **Harz-Komp.** | | | | | | | | | |
| | BA-DGE | 59.9 | 60.8 | 64.3 | 59.9 | 52.4 | 62.5 | 63.3 | 66.5 |
| | D.E.N.® 438 | - | - | - | - | 7.5 | - | - | - |
| | BuD-DGE | 11.2 | 11.4 | 12.1 | 11.2 | 11.2 | 11.7 | 11.9 | 12.5 |
| | Solvesso | 3.8 | 3.8 | 4.0 | 3.8 | 3.8 | 3.9 | 4.0 | 4.1 |
| | Quarzmehl | 130.0 | 130.0 | 130.0 | 130.0 | 130.0 | 130.0 | 130.0 | 130.0 |
| | Quarzsand | 100.0 | 100.0 | 100.0 | 100.0 | 100.0 | 100.0 | 100.0 | 100.0 |

| **Härter-Komp.** | | | | | | | | | |
|---|---|---|---|---|---|---|---|---|---|
| | Addukt | **A1** 17.6 | **A2** 16.8 | **A3** 12.7 | **A4** 17.6 | **A4** 17.6 | **A1** 17.5 | **A2** 16.6 | **A3** 13.5 |
| | DMAPAPA | 7.5 | 7.2 | 6.9 | 7.5 | 7.5 | - | - | - |
| | TETA | - | - | - | - | - | 4.4 | 4.2 | 3.4 |
| | Quarzmehl | 20.0 | 20.0 | 20.0 | 20.0 | 20.0 | 20.0 | 20.0 | 20.0 |
| | Quarzsand | 50.0 | 50.0 | 50.0 | 50.0 | 50.0 | 50.0 | 50.0 | 50.0 |

| **Zugfestigkeit:** | | | | | | | | | |
|---|---|---|---|---|---|---|---|---|---|
| (2d NK) [MPa] | | 31 | 27 | n.b. | 23 | 19 | 32 | 28 | 24 |
| (7d NK) [MPa] | | 34 | 28 | 24 | 24 | 26 | 32 | 29 | 26 |
| (3d 5°C) [MPa] | | 26 | 25 | n.b. | 13 | 18 | n.b. | n.b. | n.b. |

| **Bruchdehnung:** | | | | | | | | | |
|---|---|---|---|---|---|---|---|---|---|
| | (2d NK) | 0.2 % | 0.2 % | n.b. | 0.2 % | 0.2 % | 0.2 % | 0.2 % | 0.2 % |
| | (7d NK) | 0.2 % | 0.2 % | 0.2 % | 0.2 % | 0.2 % | 0.2 % | 0.2 % | 0.2 % |
| | (3d 5°C) | 0.3 % | 0.5 % | n.b. | 0.2 % | 0.2 % | n.b. | n.b. | n.b. |

| **Druckfestigkeit** | | | | | | | | | |
|---|---|---|---|---|---|---|---|---|---|
| [MPa] (2d NK) | | 131 | 121 | 131 | n.b. | n.b. | 104 | 103 | n.b. |
| | (7d NK) | 138 | 134 | 134 | n.b. | n.b. | 116 | 109 | n.b. |
| | (7d 5°C) | 115 | 101 | 101 | n.b. | n.b. | n.b. | n.b. | n.b. |
| (7d 5°C+7d NK) | | 133 | 112 | 118 | n.b. | n.b. | n.b. | n.b. | n.b. |
| **LSS** Stahl [MPa] | | 10.1 | 8.1 | 9.3 | 8.6 | 9.4 | 4.8 | 2.8 | 4.0 |
| **LSS** CFK [MPa] | | 10.6 | 15.3 | 7.6 | 9.5 | 7.7 | n.b. | n.b. | n.b. |
| **Haftzug** [MPa] | | 24.1 | 17.7 | n.b. | 18.1 | 22.8 | 14.4 | 11.4 | 12.0 |
| **Tg** 1st/2nd run [°C] | | 58 / 73 | 59 / 93 | 63 / 79 | 54 / 67 | 55 / 69 | 51 / 73 | 52 / 74 | 53 / 91 |

## Patentansprüche

1. Addukt **AD** erhalten aus der Umsetzung von
- mindestens einem Novolak-Glycidylether enthaltend im Mittel 2.5 bis 4 Epoxidgruppen pro Molekül mit
- einer Aminmischung enthaltend Bis(6-aminohexyl)amin und mindestens ein von Bis(6-aminohexyl)amin verschiedenes Amin **A1,** welches mindestens eine primäre Aminogruppe aufweist.

2. Addukt **AD** gemäss Anspruch 1, **dadurch gekennzeichnet, dass** der Novolak-Glycidylether ein Phenol-Novolak-Glycidylether ist.

3. Addukt **AD** gemäss einem der Ansprüche 1 oder 2, **dadurch gekennzeichnet, dass** die Aminmischung 25 bis 82 Gewichts-% Bis(6-amino-hexyl)amin und 15 bis 75 Gewichts-% Amine **A1** enthält.

4. Addukt **AD** gemäss einem der Ansprüche 1 bis 3, **dadurch gekennzeichnet, dass** das Amin **A1** ausgewählt ist aus der Gruppe bestehend aus 1,6-Hexamethylendiamin, höheren Oligomeren von 1,6-Hexamethylendiamin, 6-Aminocapronitril und 6-Aminocaproamid.

5. Addukt **AD** gemäss einem der Ansprüche 1 bis 4, **dadurch gekennzeichnet, dass** bei der Umsetzung die primären Aminogruppen der Aminmischung gegenüber den Epoxidgruppen des Novolak-Glycidylethers im stöchiometrischen Überschuss vorliegen.

6. Addukt **AD** gemäss einem der Ansprüche 1 bis 5, **dadurch gekennzeichnet, dass** die Aminmischung vorgelegt und der Novolak-Glycidylether zugemischt wird, wobei die Umsetzung bei einer Temperatur im Bereich von 60 bis 140 °C und ohne Lösemittel oder Verdünner durchgeführt wird.

7. Härter für Epoxidharze, umfassend das Addukt **AD** gemäss einem der Ansprüche 1 bis 6 und mindestens ein weiteres von Bis(6-aminohexyl)-amin verschiedenes Amin **A2,** welches im Mittel mindestens zwei, insbesondere mindestens drei, gegenüber Epoxidgruppen reaktive Aminwasserstoffe pro Molekül aufweist.

8. Härter gemäss Anspruch 7, **dadurch gekennzeichnet, dass** das Amin **A2** ausgewählt ist aus der Gruppe bestehend aus 2,2(4),4-Trimethylhexame-thylendiamin, Triethylentetramin, Tetraethylenpentamin, Pentaethylenhexamin, Hexaethylenheptamin, N,N'-Bis(3-aminopropyl)ethylendiamin, 1-Amino-3-aminomethyl-3,5,5-trimethylcyclohexan, 1,3-Bis(aminomethyl)-cyclohexan, 1,4-Bis(aminomethyl)cyclohexan, 1,3-Bis(aminomethyl)benzol, Polyoxyalkylendi- und -triaminen mit einem mittleren Molekulargewicht im Bereich von 200 bis 500 g/mol und 3-(3-(Dimethylamino)propyl-amino)propylamin.

9. Härter gemäss einem der Ansprüche 7 oder 8, **dadurch gekennzeichnet, dass** er einen Gehalt an Addukt **AD** im Bereich von 20 bis 80 Gewichts-% bezogen auf die im Härter enthaltenen, mit Epoxidgruppen reaktiven Verbindungen aufweist.

10. Epoxidharz-Zusammensetzung umfassend
- eine Harz-Komponente enthaltend mindestens ein Epoxidharz und
- eine Härter-Komponente enthaltend das Addukt **AD** gemäss einem der Ansprüche 1 bis 6.

11. Epoxidharz-Zusammensetzung gemäss Anspruch 10, **dadurch gekennzeichnet, dass** die Härter-Komponente einen Härter gemäss einem der Ansprüche 7 bis 9 umfasst.

12. Epoxidharz-Zusammensetzung gemäss einem der Ansprüche 10 oder 11, **dadurch gekennzeichnet, dass** sie mindestens 50 Gewichts-% anorganische Füllstoffe umfasst.

13. Ausgehärtete Epoxidharz-Zusammensetzung, erhalten aus der Epoxidharz-Zusammensetzung gemäss einem der Ansprüche 10 bis 12 nach dem Mischen der Komponenten und deren Aushärtung.

14. Verwendung der Epoxidharz-Zusammensetzung gemäss einem der Ansprüche 10 bis 12 in einem Verfahren zum Verkleben, umfassend die Schritte
- Mischen der Komponenten mit einer geeigneten Methode und entweder
- Applizieren der gemischten Zusammensetzung auf mindestens eines der zu verklebenden Substrate,
- Fügen der Substrate zu einer Verklebung innerhalb der Offenzeit der Zusammensetzung,
oder
- Applizieren der gemischten Zusammensetzung in einen Hohlraum oder Spalt zwischen zwei Substraten,
- gegebenenfalls Einfügen eines Ankers in den Hohlraum oder Spalt innerhalb der Offenzeit der Zusammensetzung,
gefolgt von der Aushärtung der Zusammensetzung.

15. Verklebter Artikel erhalten aus der Verwendung gemäss Anspruch 14.
